# EUROPÄISCHE PATENTANMELDUNG

(11) **EP 2 008 800 A1**
(43) Veröffentlichungstag der Anmeldung: **31.12.2008**
(21) Anmeldenummer: 07012665.1
(22) Anmeldetag: 28.06.2007
(51) Int. Cl.: B30B 1/26, F16H 3/30, F16H 63/30

(54) **Antriebseinrichtung für einen Press-, Stanz- oder Umformautomaten**

(71) Anmelder: Haulick + Roos GmbH, 75175 Pforzheim (DE)
(72) Erfinder: Roos, Markus, 75181 Pforzheim (DE); Siegel, Andreas, 75417 Mühlacker (DE)
(74) Vertreter: Hoeger, Stellrecht & Partner Patentanwälte

(57) **Zusammenfassung**

Die Erfindung betrifft eine Antriebseinrichtung für einen Press-, Stanz- oder Umformautomaten, mit einem Antriebsmotor und einem mindestens zwei Schaltstufen aufweisenden Schaltgetriebe zum Antrieb einer Exzenterwelle, wobei die Drehzahl des Antriebsmotors während einer Umdrehung der Exzenterwelle veränderbar ist. Um die Antriebseinrichtung derart weiterzubilden, dass deren Wärmeentwicklung verringert werden kann, wird erfindungsgemäß vorgeschlagen, dass das Schaltgetriebe nur im Stillstand schaltbar ist.

## Beschreibung

Die Erfindung betrifft eine Antriebseinrichtung für einen Press-, Stanz- oder Umformautomaten, mit einem Antriebsmotor und einem mindestens zwei Schaltstufen aufweisenden Schaltgetriebe zum Antrieb einer Exzenterwelle, wobei die Drehzahl des Antriebsmotors während einer Umdrehung der Exzenterwelle veränderbar ist.

Mit Hilfe derartiger Antriebseinrichtungen kann die Exzenterwelle eines Press-, Stanz- oder Umformautomaten in Drehung versetzt werden. An der Exzenterwelle ist üblicherweise mindestens ein Pleuel gelagert, das mit einem Stößel verbunden ist und die Drehbewegung der Exzenterwelle in eine Translationsbewegung des Stößels wandelt. Der Stößel kann dadurch zu einer Hin- und Herbewegung relativ zu einem Tisch des Press-, Stanz- oder Umformautomaten angetrieben werden. Am Stößel und am Tisch können miteinander zusammenwirkende Werkzeuge gehalten werden zur Bearbeitung eines Werkstückes. Das Werkstück kann beispielsweise geprägt, gestanzt oder umgeformt werden.

Um dem Material des Werkstückes bei seiner Bearbeitung ausreichend Zeit zum Verformen zu geben, so dass relativ langsame Umformprozesse mit hoher Maßhaltigkeit durchgeführt werden können, kann die Drehzahl des Antriebsmotors während einer Umdrehung der Exzenterwelle verändert werden. Dies gibt die Möglichkeit, dem Stößel einen bezogen auf den unteren Totpunkt unsymmetrischen Geschwindigkeitsverlauf zu verleihen. Bei einer Abwärtsbewegung kann er sich mit relativ langsamer Geschwindigkeit dem unteren Totpunkt annähern, und nach Durchlaufen des unteren Totpunktes kann er eine verhältnismäßig schnelle Aufwärtsbewegung ausführen. Somit kann zum einen eine verhältnismäßig geringe Umformgeschwindigkeit erzielt werden, um eine hohe Bearbeitungsqualität zu erzielen, zum anderen kann eine hohe Ausbringungsmenge des Automaten erreicht werden, so dass innerhalb verhältnismäßig kurzer Zeit eine große Anzahl von Werkstücken bearbeitet werden können.

Antriebseinrichtungen der eingangs genannten Art sind aus der Gebrauchsmusterschrift DE 20 2006 013440 U1 bekannt. Die darin beschriebene Antriebseinrichtung weist ein Schaltgetriebe auf, dessen Schaltstufen während einer Umdrehung der Exzenterwelle veränderbar sind. Dies ermöglicht eine sehr hohe Flexibilität bei der Bearbeitung eines Werkstückes, allerdings tritt während des Betriebes der Antriebseinrichtung eine erhebliche Wärmeentwicklung auf.

Aufgabe der vorliegenden Erfindung ist es, eine Antriebseinrichtung der eingangs genannten Art derart weiterzubilden, dass deren Wärmeentwicklung verringert werden kann.

Diese Aufgabe wird bei einer Antriebseinrichtung der gattungsgemäßen Art erfindungsgemäß dadurch gelöst, dass das Schaltgetriebe nur im Stillstand schaltbar ist. Es hat sich gezeigt, dass dadurch die Wärmeentwicklung der Antriebseinrichtung deutlich reduziert werden kann. Darüber hinaus hat die erfindungsgemäße Antriebseinrichtung den Vorteil, dass sie kostengünstiger hergestellt werden kann. Ein weiterer Vorteil liegt darin, dass das Schaltgetriebe eine sehr drehstarre Kopplung des Antriebsmotors mit der Exzenterwelle ermöglicht.

Als drehzahlveränderlicher Antriebsmotor kommt vorzugsweise ein Servomotor oder ein Torquemotor zum Einsatz. Servomotoren sind sehr winkelgenau in ihrer Drehzahl steuerbar, so dass bei vorgegebenem Drehwinkel der Exzenterwelle die Drehzahl des Antriebsmotors verändert werden kann. Torquemotoren haben den Vorteil, dass sie bei verhältnismäßig geringer Drehzahl ein hohes Drehmoment bereitstellen. Bei vergleichbarer Leistung kann von Torquemotoren ein doppelt so großes Drehmoment bereitgestellt werden also von Servomotoren. Bei beiden Motorarten kann die Drehzahl elektronisch variiert werden. Hierzu kann die Antriebseinheit eine entsprechende elektrische Steuereinheit umfassen.

Bei einer vorteilhaften Ausführungsform weist das Schaltgetriebe der erfindungsgemäßen Antriebseinrichtung ein erstes und ein zweites Getrieberadpaar auf, wobei wahlweise die Getrieberäder des ersten oder des zweiten Getrieberadpaares drehfest miteinander verbindbar sind. Eine gleichzeitige drehfeste Kopplung sowohl der Getrieberäder des ersten Getrieberadpaares als auch der Getrieberäder des zweiten Getrieberadpaares wird somit vermieden. Dies ermöglicht es, die Wärmeentwicklung des Schaltgetriebes gering zu halten.

Die beiden Getrieberadpaare sind vorzugsweise jeweils als Zahnradpaare ausgestaltet, insbesondere in Form von Stirnrädern mit Außenverzahnung.

Günstig ist es, wenn das Schaltgetriebe zwei drehfest mit einer ersten Getriebewelle verbundene erste Zahnräder aufweist sowie zwei drehfest mit einer zweiten Getriebewelle verbundene zweite Zahnräder, wobei alternativ eines der beiden ersten Zahnräder mit einem der beiden zweiten Zahnräder kämmt. Eine besonders kostengünstig herstellbare Ausgestaltung zeichnet sich dadurch aus, dass die beiden ersten Zahnräder oder die beiden zweiten Zahnräder des Schaltgetriebes gemeinsam verschiebbar sind. Die beiden ersten Zahnräder oder die beiden zweiten Zahnräder können somit zwischen einer ersten Schaltstellung und einer zweiten Schaltstellung hin und her verschoben werden, wobei in jeder Schaltstellung eines der beiden Zahnräder mit einem korrespondierenden Zahnrad des Schaltgetriebes in Eingriff steht.

Es kann beispielsweise vorgesehen sein, dass die beiden ersten Zahnräder oder die beiden zweiten Zahnräder drehfest an einer Schiebehülse gehalten sind, die drehfest und axial verschiebbar an der ersten bzw. der zweiten Getriebewelle gelagert ist. Durch Verschieben der Schiebehülse können somit die beiden ersten oder die beiden zweiten Zahnräder zwischen einer ersten und einer zweiten Schaltstellung hin und her verschoben werden. In beiden Schaltstellungen sind die Zahnräder drehfest über die Schiebehülse mit einer Getriebewelle verbunden, wobei jedoch in jeder Schaltstellung nur eines der beiden Zahnräder mit einem zweiten Zahnrad des Schaltgetriebes in Eingriff steht.

Die Schiebehülse ist bei einer konstruktiv einfachen und kostengünstig herstellbaren Ausführungsform mechanisch zwischen einer ersten Schaltstellung und einer zweiten Schaltstellung hin und her verschiebbar. Zum mechanischen Verschieben der Schiebehülse kann beispielsweise eine Schaltklaue zum Einsatz kommen, die an der Schiebehülse angreift und diese verschiebt.

Von besonderem Vorteil ist es, wenn die Schiebehülse hydraulisch zwischen einer ersten Schaltstellung und einer zweiten Schaltstellung hin und her verschiebbar ist. Die Steuerung des Schaltgetriebes kann somit hydraulisch erfolgen.

Von Vorteil ist es, wenn die Schiebehülse einen druckbeaufschlagbaren Schiebezylinder ausbildet, der an der ersten oder der zweiten Getriebewelle des Schaltgetriebes axial verschiebbar und drehfest gehalten ist. Die Schiebehülse kann somit durch Beaufschlagen mit einer unter Druck stehenden Hydraulikflüssigkeit zwischen ihren Schaltstellungen hin und her verschoben werden.

Zur Bereitstellung der Hydraulikflüssigkeit ist es günstig, wenn die Getriebewelle, an der die Schiebehülse gelagert ist, zwei Hydraulikleitungen für Hydraulikflüssigkeit aufweist. Die Hydraulikflüssigkeit kann somit durch die Getriebewelle hindurch zur Schiebehülse geleitet werden.

Bei einer besonders bevorzugten Ausgestaltung der Erfindung trägt die Getriebewelle, an der die Schiebehülse gelagert ist, eine Führungseinrichtung für die Schiebehülse und ist von zwei ringförmigen Endscheiben umgeben. Die Führungseinrichtung und die beiden Endscheiben definieren in Kombination mit der Schiebehülse und der Getriebewelle zwei hydraulisch beaufschlagbare Ringräume, in die jeweils eine Hydraulikleitung einmündet. Durch Beaufschlagen von jeweils einem der beiden Ringräume kann die Schiebehülse entlang der Getriebewelle verschoben werden.

Bei einer bevorzugten Ausgestaltung der erfindungsgemäßen Antriebseinrichtung weist das Schaltgetriebe mindestens eine Bremse auf zum drehfesten Arretieren der Exzenterwelle. Dies gibt zum einen die Möglichkeit, die Drehzahl der Exzenterwelle mittels der Bremse zu reduzieren, zum anderen kann dadurch die Exzenterwelle vollständig arretiert werden, um beispielsweise die am Stößel und am Tisch des Press-, Stanz- oder Umformautomaten montierten Werkzeuge auszutauschen. Es kann beispielsweise vorgesehen sein, dass die Bremse direkt oder indirekt auf eine Getriebewelle des Schaltgetriebes einwirkt, wobei die Getriebewelle drehfest mit der Exzenterwelle gekoppelt ist.

Vorzugsweise ist die Bremse hydraulisch lösbar. Hierbei ist es von Vorteil, wenn die Bremse permanent mit einer Federkraft beaufschlagbar ist und entgegen der Wirkung der Federkraft durch Beaufschlagung mit unter Druck stehender Hydraulikflüssigkeit gelöst werden kann.

Es kann vorgesehen sein, dass der Antriebsmotor direkt mit dem Schaltgetriebe gekoppelt ist. Von Vorteil ist es jedoch, wenn der Antriebsmotor über ein Drehmomentübertragungsglied mit dem Schaltgetriebe verbunden ist. Dadurch kann eine besonders kompakte Bauform für die Antriebseinrichtung erzielt werden und außerdem können dadurch die auf den Antriebsmotor einwirkenden Massenträgheitsmomente reduziert werden.

Vorzugsweise ist das Drehmomentübertragungsglied als Riementrieb ausgestaltet. Der Riementrieb kann einen Zahnriemen umfassen, über den eine erste, drehfest mit der Motorwelle verbundene Riemenscheibe mit einer zweiten, drehfest mit einer ersten Getriebewelle des Schaltgetriebes verbundenen Riemenscheibe gekoppelt ist.

Eine besonders kompakte Bauform wird bei einer vorteilhaften Ausgestaltung der Erfindung dadurch erzielt, dass die Motorwelle zur ersten Getriebewelle versetzt angeordnet und parallel zu dieser ausgerichtet ist.

Um die Drehzahl und die Drehstellung der Exzenterwelle zu erfassen, kommen vorzugsweise Messglieder, insbesondere Sensoren, zum Einsatz, die mit der Steuereinheit elektrisch verbunden sind.

Günstig ist es, wenn das Schaltgetriebe über ein Planetengetriebe mit der Exzenterwelle in Drehverbindung steht. Dadurch kann der Exzenterwelle ein besonders großes Drehmoment bereitgestellt werden.

Es kann beispielsweise vorgesehen sein, dass das Schaltgetriebe eine mit dem Sonnenrad des Planetengetriebes drehfest verbundene Getriebewelle aufweist.

Die Exzenterwelle ist vorzugsweise mit dem Planetenträger des Planetengetriebes drehfest verbindbar.

Von besonderem Vorteil im Hinblick auf eine möglichst kompakte Ausgestaltung ist es, wenn das Hohlrad des Planetengetriebes drehfest mit dem Gehäuse des Schaltgetriebes verbunden ist.

Die nachfolgende Beschreibung bevorzugter Ausführungsformen der Erfindung dient im Zusammenhang mit der Zeichnung der näheren Erläuterung. Es zeigen:
- Figur 1:: eine schematische Darstellung einer ersten Ausführungsform einer erfindungsgemäßen Antriebseinrichtung, die mit einer Exzenterwelle gekoppelt ist;
- Figur 2:: eine vergrößerte Darstellung der Antriebseinrichtung aus Figur 1;
- Figur 3:: eine vergrößerte Darstellung einer zweiten Ausführungsform einer erfindungsgemäßen Antriebseinrichtung;
- Figur 4:: eine Detaildarstellung einer dritten Ausführungsform einer erfindungsgemäßen Antriebseinrichtung mit einem Schaltgetriebe in einer ersten Schaltstellung und
- Figur 5:: eine Detaildarstellung entsprechend Figur 4, wobei das Schaltgetriebe seine zweite Schaltstellung einnimmt.

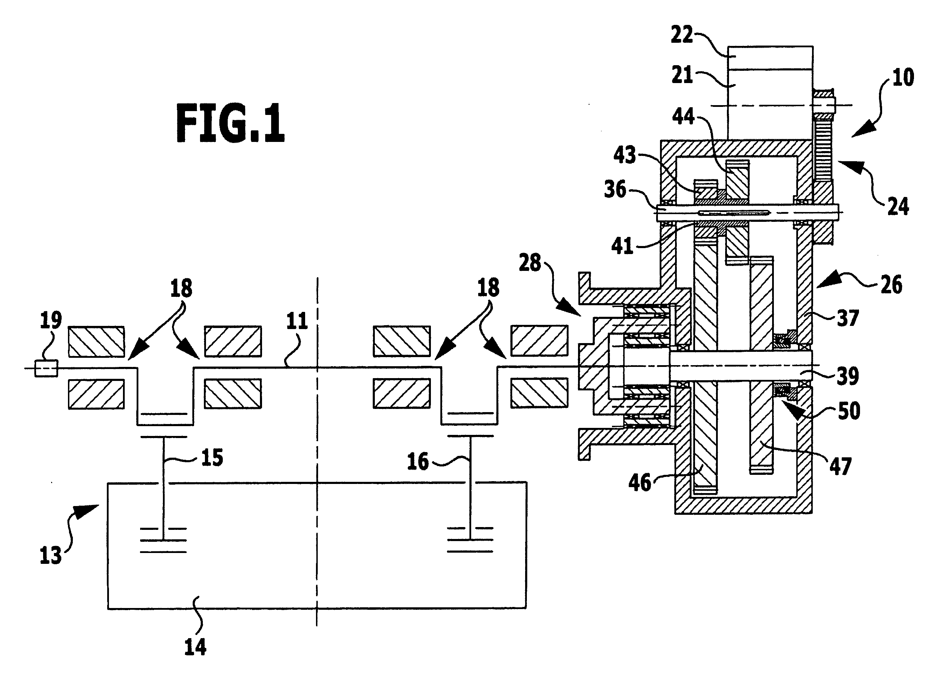

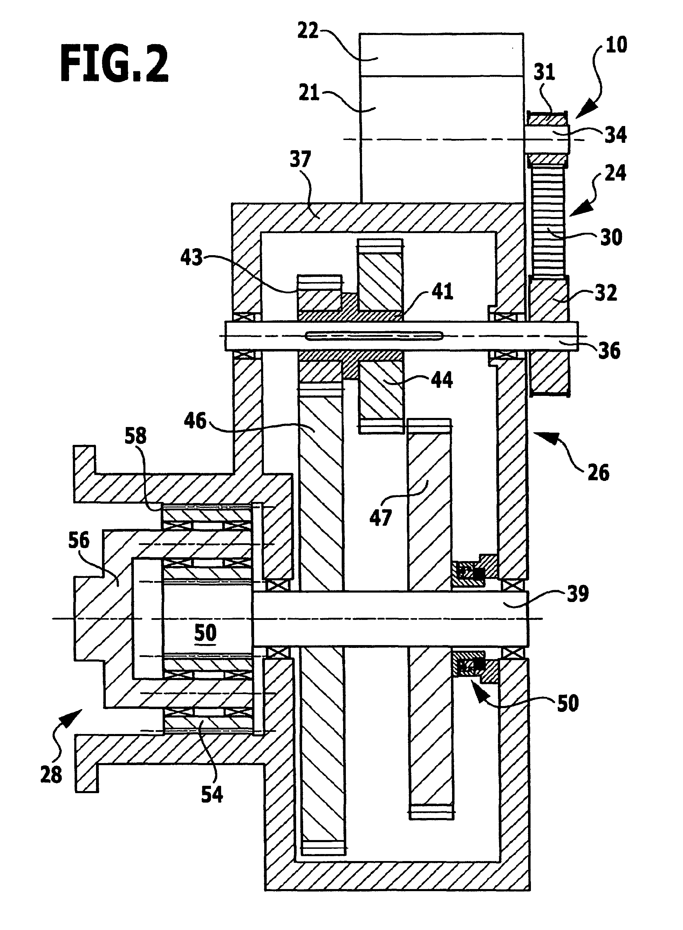

In den Figuren 1 und 2 ist schematisch eine erste Ausführungsform einer erfindungsgemäßen Antriebseinrichtung 10 dargestellt, mit deren Hilfe eine Exzenterwelle 11 eines nur auszugsweise dargestellten Press-, Stanz- oder Umformautomaten 13 in Drehung versetzt werden kann. Der Automat 13 umfasst einen Stößel 14, der über zwei Pleuel 15, 16 mit der Exzenterwelle 11 verbunden ist. Die Exzenterwelle 11 ist mit Hilfe von Wälz- oder Gleitlagern 18 drehbar an einem in der Zeichnung zur Erzielung einer besseren Übersicht nicht dargestellten Gestell des an sich bekannten Press-, Stanz- oder Umformautomaten 13 drehbar gelagert. Mit Hilfe eines Sensors 19 kann die Drehzahl und die Drehstellung der Exzenterwelle 11 erfasst werden.

Die Antriebseinrichtung 10 umfasst einen Servomotor 21. Alternativ könnte auch ein Torquemotor zum Einsatz kommen. Der Servomotor 21 wird von einer Steuereinheit gesteuert, die in einem Schaltschrank angeordnet ist und über in der Zeichnung nicht dargestellte elektrische Leitungen mit dem Sensor 19 und mit dem Servomotor 21 verbunden ist.

Der Servomotor 21 steht über einen Riementrieb 24, ein Schaltgetriebe 26 und ein diesem nachgeordnetes Planetengetriebe 28 mit der Exzenterwelle 11 in Drehverbindung. Der Riementrieb 24 umfasst einen Zahnriemen 30, über den eine erste Riemenscheibe 31 mit einer zweiten Riemenscheibe 32 drehfest gekoppelt ist. Die erste Riemenscheibe 31 ist drehfest mit der Motorwelle 34 des Servomotors 21 verbunden, und die zweite Riemenscheibe 32 ist drehfest mit einer ersten Getriebewelle 36 des Schaltgetriebes 26 verbunden. Die erste Getriebewelle 36 ist an einem Getriebegehäuse 37 des Schaltgetriebes 26 drehbar gelagert und parallel zur Motorwelle 34 ausgerichtet. Zusätzlich zur ersten Getriebewelle 36 umfasst das Schaltgetriebe 26 eine zweite Getriebewelle 39, die ebenfalls am Getriebegehäuse 37 drehbar gelagert ist und die parallel zur ersten Getriebewelle 36 ausgerichtet ist.

An der ersten Getriebewelle 36 ist eine Schiebehülse 41 drehfest, jedoch axial verschiebbar gehalten, an der ein erstes Zahnritzel 43 und ein zweites Zahnritzel 44 drehfest montiert sind. Die Schiebehülse 41 ist in axialer Richtung der ersten Getriebewelle 36 zwischen einer ersten, in den Figuren 1 und 2 dargestellten Schaltstellung und einer zweiten Schaltstellung hin und her verschiebbar. Zu diesem Zweck kann die Schiebehülse 41 mittels einer an sich bekannten und deshalb zur Erzielung einer besseren Übersicht in der Zeichnung nicht dargestellten Schaltklaue verschoben werden. Alternativ kann eine hydraulisch verschiebbare Schiebehülse zum Einsatz kommen. Dies wird nachstehend noch näher erläutert.

In der ersten Schaltstellung der Schiebehülse 41 kämmt das erste Zahnritzel 43 mit einem drehfest an der zweiten Getriebewelle 39 gehaltenen ersten Zahnrad 46, wohingegen das zweite Zahnritzel 44 versetzt zu einem an der zweiten Getriebewelle 39 drehfest gehaltenen zweiten Zahnrad 47 angeordnet ist. Somit ist in der ersten Schaltstellung der Schiebehülse 41 lediglich das erste Zahnritzel 43 drehfest mit dem ersten Zahnrad 46 verbunden, wohingegen keine drehfeste Verbindung besteht zwischen dem zweiten Zahnritzel 44 und dem zweiten Zahnrad 47.

Wird die Schiebehülse 41 in ihre zweite Schaltstellung verschoben, so gelangt das erste Zahnritzel 43 mit dem ersten Zahnrad 46 außer Eingriff, gleichzeitig wird jedoch eine drehfeste Verbindung zwischen dem zweiten Zahnritzel 44 und dem zweiten Zahnrad 47 hergestellt, so dass die erste Getriebewelle 36 in der zweiten Schaltstellung der Schiebehülse 41 über das zweite Zahnritzel 44 und das zweite Zahnrad 47 mit der zweiten Getriebewelle 39 in Drehverbindung steht.

Das erste Zahnritzel 43 bildet in Kombination mit dem ersten Zahnrad 46 ein erstes Getrieberadpaar aus, das ein erstes Übersetzungsverhältnis definiert, beispielsweise ein Übersetzungsverhältnis von etwa 3:1. Das zweite Zahnritzel 44 bildet in Kombination mit dem zweiten Zahnrad 47 ein zweites Getrieberadpaar aus, das ein zweites Übersetzungsverhältnis definiert, beispielsweise ein Übersetzungsverhältnis von cirka 1,5:1.

Zwischen dem zweiten Zahnrad 47 und dem Getriebegehäuse 37 ist eine permanent mit einer Federkraft beaufschlagte, hydraulisch lösbare Bremse 50 angeordnet, mit deren Hilfe das zweite Zahnrad 47 und über dieses auch die zweite Getriebewelle 39 festgelegt werden können. Mittels der Bremse 50 kann die Exzenterwelle 11 und damit auch der Stößel 14 abgebremst und in einer gewünschten Stellung arretiert werden, da die zweite Getriebewelle 39 über das Planetengetriebe 28 drehfest mit der Exzenterwelle gekoppelt ist.

Die zweite Getriebewelle 39 ragt mit ihrem freien Ende in Richtung auf die Exzenterwelle 11 aus dem Getriebegehäuse 37 heraus. An ihrem überstehenden Endbereich trägt die zweite Getriebewelle 39 drehfest ein Sonnenrad 52 des Planetengetriebes 28. Das Sonnenrad 52 kämmt in üblicher Weise mit mehreren Planetenrädern 54, die frei drehbar an einem Planetenträger 56 gelagert sind, der wiederum mit der Exzenterwelle 11 in Drehverbindung steht. Die Planetenräder 54 kämmen mit einem die Planetenräder 54 umgebenden Hohlrad 58, das drehfest mit dem Getriebegehäuse 37 verbunden ist.

Wie bereits erläutert, kann die Drehzahl des Servomotors 21 während einer Umdrehung der Exzenterwelle 11 verändert werden. Dies gibt die Möglichkeit, den Stößel 14 mit verhältnismäßig geringer Geschwindigkeit seinem unteren Totpunkt anzunähern, um ein Werkstück zu bearbeiten. Nach erfolgter Bearbeitung kann der Stößel 11 mit verhältnismäßig großer Geschwindigkeit wieder angehoben werden und innerhalb kurzer Zeit seinen oberen Totpunkt durchlaufen. Selbstverständlich kann der Servomotor 21 auch mit gleich bleibender Drehzahl betrieben werden. Dies gibt die Möglichkeit, Werkstücke mit gleich bleibender Drehzahl der Exzenterwelle 11 zu bearbeiten.

Vor Beginn einer Bearbeitung kann die gewünschte Schaltstufe des Schaltgetriebes 26 eingestellt werden, wobei sich das Schaltgetriebe 26 noch im Stillstand befindet. Falls eine Variation der Drehzahl der Exzenterwelle 11 gewünscht wird, kann beispielsweise die erste Schaltstellung eingestellt werden, in der das erste Zahnritzel 43 mit dem ersten Zahnrad 46 kämmt, wohingegen das zweite Zahnritzel 44 mit dem zweiten Zahnrad 47 nicht in Eingriff steht. Es kann dadurch eine Untersetzung der Drehzahl erzielt werden. Bei fest eingestellter Schaltstufe kann dann während des Betriebes der Antriebseinrichtung 10 mittels des Servomotors 21 die Drehzahl der Exzenterwelle 11 variiert werden, falls dies zur präzisen Bearbeitung eines Werkstückes erforderlich ist.

Falls die Beabreitung eines Werkstückes mit verhältnismäßig großer Drehzahl erfolgen soll, kann vor Beginn einer Bearbeitung die zweite Schaltstufe des Schaltgetriebes 26 eingestellt werden, so dass das zweite Zahnritzel 44 mit dem zweiten Zahnrad 47 kämmt, wohingegen das erste Zahnritzel 43 mit dem ersten Zahnrad 46 außer Eingriff steht. Auch in dieser Schaltstellung kann bei Bedarf die Drehzahl der Exzenterwelle 11 mittels des Servomotors 21 im laufenden Betrieb der Antriebseinrichtung 10 verändert werden. Besonders vorteilhaft ist die Schaltstellung jedoch dann, wenn der Servomotor 26 mit gleich bleibender Drehzahl betrieben wird. Letzteres ist insbesondere dann von Vorteil, wenn für den Press-, Stanz- oder Umformautomaten 13 eine sehr hohe Ausbringungsmenge erzielt werden soll.

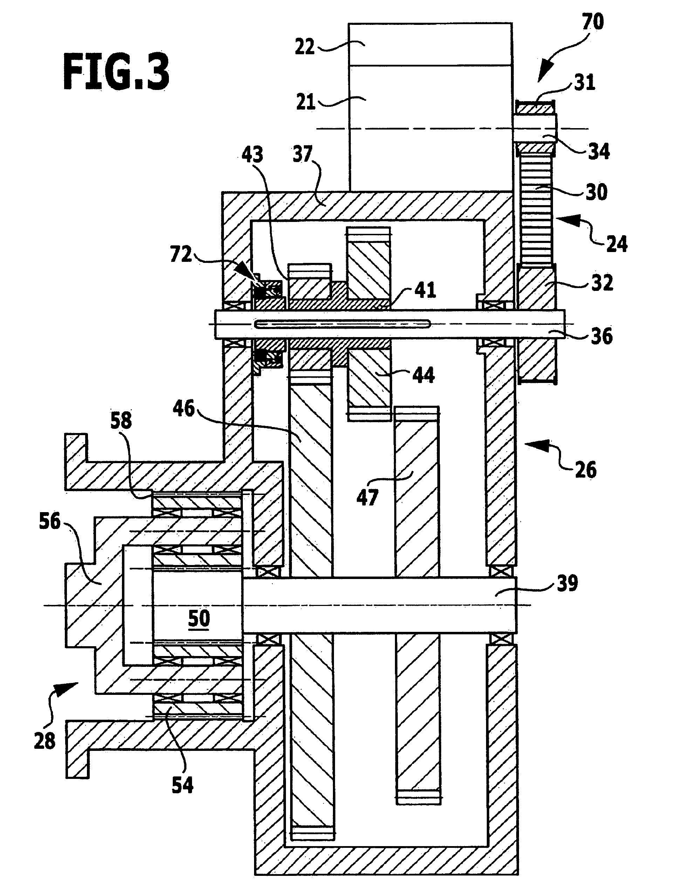

In Figur 3 ist eine zweite Ausführungsform einer erfindungsgemäßen Antriebseinrichtung dargestellt, die insgesamt mit dem Bezugszeichen 70 belegt ist. Diese ist weitgehend identisch ausgestaltet wie die voranstehend unter Bezugnahme auf die Figuren 1 und 2 erläuterte Antriebseinrichtung 10. Für identische Bauteile werden daher in Figur 3 dieselben Bezugszeichen verwendet wie in den Figuren 1 und 2. Bezüglich dieser Bauteile wird zur Vermeidung von Wiederholungen auf die voranstehenden Erläuterungen Bezug genommen.

Die Antriebseinrichtung 70 unterscheidet sich von der Antriebseinrichtung 10 lediglich dadurch, dass statt der zwischen dem zweiten Zahnrad 47 und dem Getriebegehäuse 37 angeordneten Bremse 50 eine Bremse 72 zum Einsatz kommt, die zwischen dem ersten Zahnritzel 43 und dem Getriebegehäuse 37 angeordnet ist und eine unmittelbare drehfeste Verbindung zwischen der ersten Getriebewelle 36 und dem Getriebegehäuse 37 ermöglicht. Die Bremse 72 ist ebenfalls hydraulisch lösbar und permanent mit einer Federkraft beaufschlagt. Auch mittels der Bremse 72 kann die Exzenterwelle 11 und über diese der Stößel 14 abgebremst und in einer gewünschten Stellung arretiert werden. Die Bremse 72 ermöglicht hierbei eine direkte Kopplung der ersten Getriebewelle 36 mit dem Getriebegehäuse 37. Sie weist hierzu erste und zweite Bremsteile auf, wobei die ersten Bremsteile am Getriebegehäuse 37 und die zweiten Bremsteile an der ersten Getriebewelle 36 festgelegt sind. Durch Beaufschlagung mit einer unter Druck stehenden Hydraulikflüssigkeit können die Bremsteile außer Eingriff gelangen, so dass die erste Getriebewelle 36 ungehindert drehbar ist.

Auch bei der Antriebseinrichtung 70 kann der Benutzer vor Beginn einer Bearbeitung zunächst eine gewünschte Schaltstellung für das Schaltgetriebe 26 auswählen, und während einer Bearbeitung kann die Drehzahl der Exzenterwelle 11 bei Bedarf mittels des Servomotors 21 variiert werden.

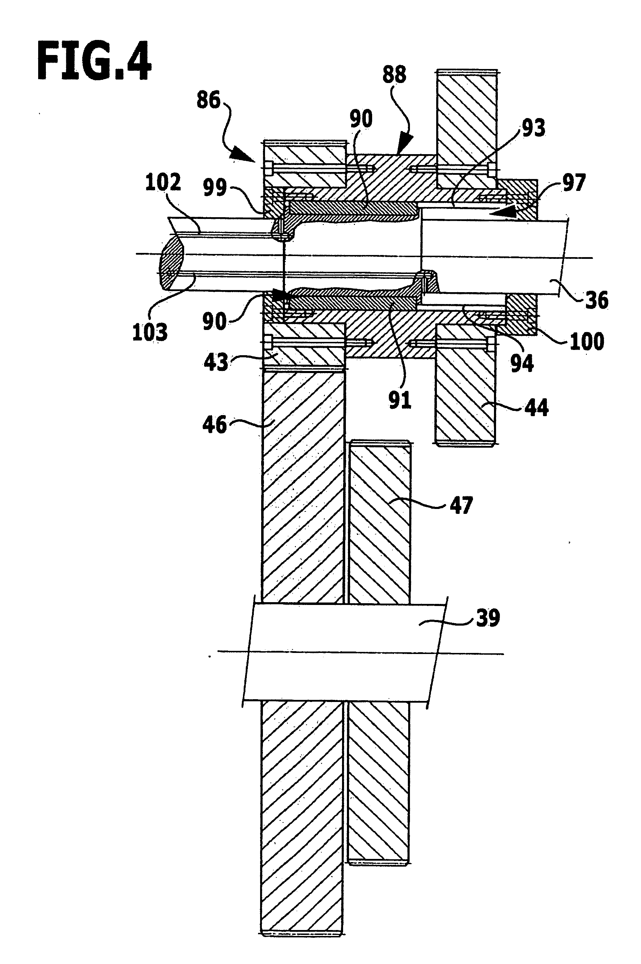

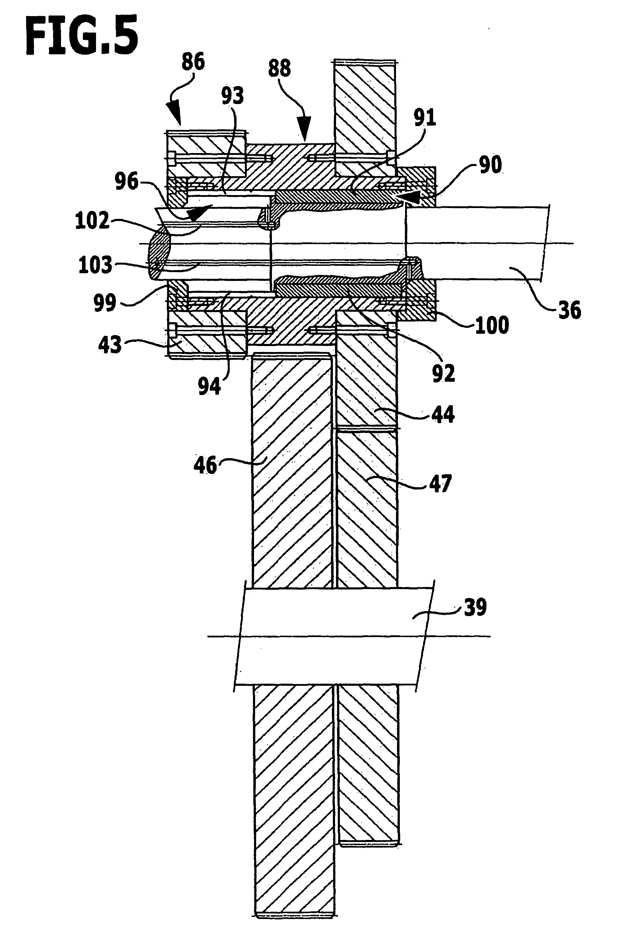

In den Figuren 4 und 5 ist eine dritte Ausführungsform einer erfindungsgemäßen Antriebseinrichtung teilweise dargestellt. Die Figuren 4 und 5 zeigen jeweils einen Ausschnitt eines Schaltgetriebes 86 der Antriebseinrichtung, wobei in Figur 4 die erste Schaltstellung des Schaltgetriebes 86 und in Figur 5 die zweite Schaltstellung des Schaltgetriebes 86 dargestellt ist.

Das Schaltgetriebe 86 ist weitgehend identisch ausgestaltet wie das voranstehend unter Bezugnahme auf die Figuren 1 und 2 beschriebene Schaltgetriebe 26. Für identische Bauteile werden daher in den Figuren 4 und 5 dieselben Bezugszeichen wie in den Figuren 1 und 2 verwendet und bezüglich dieser Bauteile wird zur Vermeidung von Wiederholungen auf die voranstehenden Erläuterungen Bezug genommen.

Im Gegensatz zum Schaltgetriebe 26, das mittels einer in der Zeichnung nicht dargestellten Schaltklaue mechanisch steuerbar ist, lässt sich das Schaltgetriebe 86 hydraulisch steuern. Hierzu weist das Schaltgetriebe 86 eine Schiebehülse auf, die in Form eines druckbeaufschlagbaren Schiebezylinders 88 ausgestaltet ist. Der Schiebezylinder 88 ist mittels einer Führungseinrichtung 90 längs der ersten Getriebewelle 36 verschiebbar. Die Führungseinrichtung 90 weist zwei einander diametral gegenüberliegende Passfedern 91, 92 auf, die drehfest an der ersten Getriebewelle 36 festgelegt sind und in Führungsnuten 93, 94 des Schiebezylinders 88 eingreifen.

Der Schiebezylinder 88 definiert in Kombination mit der ersten Getriebewelle 86 und der Führungseinrichtung 90 zwei axial versetzt zueinander angeordnete Ringräume 96, 97, die die erste Getriebewelle 36 in Umfangsrichtung umgeben und an ihren einander abgewandten Stirnseiten jeweils von einer ringförmigen Endscheibe 99 bzw. 100 begrenzt sind. Die Endscheiben 99, 100 sind mit dem Schiebezylinder 88 verschraubt und liegen passgenau an der Außenseite der ersten Getriebewelle 36 an.

In die Ringräume 96 und 97 mündet jeweils eine Hydraulikleitung 102 bzw. 103, die koaxial zur Längsachse der ersten Getriebewelle 36 durch diese hindurchgeführt ist und über die der jeweilige Ringraum 96, 97 mit unter Druck stehender Hydraulikflüssigkeit beaufschlagt werden kann.

Wird über die Hydraulikleitung 102 unter Druck stehende Hydraulikflüssigkeit dem ersten Ringraum 96 zugeführt, so verschiebt sich der Schiebezylinder 88 ausgehend von seiner in Figur 4 dargestellten ersten Schaltstellung in die in Figur 5 dargestellte zweite Schaltstellung, wobei sich der erste Ringraum 96 axial vergrößert und sich der zweite Ringraum 97 axial verkleinert. Die im Ringraum 97 befindliche Hydraulikflüssigkeit wird über die zweite Hydraulikleitung 103 abgeleitet. In der zweiten Schaltstellung kämmt das zweite Zahnritzel 44, wie voranstehend bereits erläutert, mit dem zweiten Zahnrad 47, wohingegen das erste Zahnritzel 43 mit dem ersten Zahnrad 46 außer Eingriff steht. Dies wird aus Figur 5 unmittelbar deutlich.

Soll der Schiebezylinder 88 in seine erste Schaltstellung überführt werden, so wird hierzu der zweite Ringraum 97 über die zweite Hydraulikleitung 103 mit unter Druck stehender Hydraulikflüssigkeit beaufschlagt und gleichzeitig kann aus dem ersten Ringraum 96 über die erste Hydraulikleitung 102 Hydraulikflüssigkeit abfließen. Dies hat zur Folge, dass der Schiebezylinder 88 axial in seine erste Schaltstellung verschoben wird, die in Figur 4 dargestellt ist. In dieser Schaltstellung kämmt das erste Zahnritzel 43 mit dem ersten Zahnrad 46, wohingegen das zweite Zahnritzel 44 mit dem zweiten Zahnrad 47 außer Eingriff steht.

Das in den Figuren 4 und 5 dargestellte Schaltgetriebe 86 zeichnet sich durch eine besonders leichtgängige Schaltbarkeit und gleichzeitig durch eine funktionssichere Drehmomentübertragung aus. Dies wird dadurch erzielt, dass die Passfederverbindung zwischen der ersten Getriebewelle 36 und dem Schiebezylinder 88 ständig mit Hydraulikflüssigkeit geschmiert werden kann.

Mittels der erfindungsgemäßen Antriebseinrichtung kann der Benutzer den jeweils erforderlichen Drehzahlverlauf der Exzenterwelle 11 optimal gestalten. Er kann bei gleich bleibender Drehzahl des Servomotors 21 eine hohe Getriebeübersetzung vorwählen, um eine sehr hohe Ausbringungsmenge zu erzielen, er kann aber auch eine geringere Getriebeübersetzung vorwählen, um dann Werkstücke mit sehr hoher Bearbeitungsqualität durch Variation der Drehzahl des Servomotors 21 bearbeiten zu können.

## Patentansprüche

1. Antriebseinrichtung für einen Press-, Stanz- oder Umformautomaten, mit einem Antriebsmotor und einem mindestens zwei Schaltstufen aufweisenden Schaltgetriebe zum Antrieb einer Exzenterwelle, wobei die Drehzahl des Antriebsmotors während einer Umdrehung der Exzenterwelle veränderbar ist, **dadurch gekennzeichnet, dass** das Schaltgetriebe (26, 86) nur im Stillstand schaltbar ist.

2. Antriebseinrichtung nach Anspruch 1, **dadurch gekennzeichnet, dass** das Schaltgetriebe (26; 86) ein erstes und ein zweites Getrieberadpaar (43, 46; 44, 47) aufweist, wobei wahlweise die Getrieberäder des ersten oder des zweiten Getrieberadpaars (43, 46; 44, 47) drehfest miteinander verbindbar sind.

3. Antriebseinrichtung nach Anspruch 2, **dadurch gekennzeichnet, dass** die Getrieberadpaare jeweils als Zahnradpaare (43, 46; 44, 47) ausgestaltet sind.

4. Antriebseinrichtung nach einem der voranstehenden Ansprüche, **dadurch gekennzeichnet, dass** das Schaltgetriebe (26; 86) zwei drehfest mit einer ersten Getriebewelle (36) verbundene erste Zahnräder (43, 44) aufweist sowie zwei drehfest mit einer zweiten Getriebewelle (39) verbundene zweite Zahnräder (46, 47), wobei alternativ eines der beiden ersten Zahnräder (43, 44) mit einem der beiden zweiten Zahnräder (46, 47) kämmt.

5. Antriebseinrichtung nach Anspruch 4, **dadurch gekennzeichnet, dass** die beiden ersten Zahnräder (43, 44) oder die beiden zweiten Zahnräder (46, 47) gemeinsam verschiebbar sind.

6. Antriebseinrichtung nach Anspruch 4 oder 5, **dadurch gekennzeichnet, dass** die beiden ersten Zahnräder (43, 44) oder die beiden zweiten Zahnräder (46, 47) drehfest an einer Schiebehülse (41; 88) gehalten sind, die drehfest und axial verschiebbar an einer Getriebewelle (36) gelagert ist.

7. Antriebseinrichtung nach Anspruch 6, **dadurch gekennzeichnet, dass** die Schiebehülse (41) mechanisch zwischen einer ersten Schaltstellung und einer zweiten Schaltstellung hin und her verschiebbar ist.

8. Antriebseinrichtung nach Anspruch 6, **dadurch gekennzeichnet, dass** die Schiebehülse (88) hydraulisch zwischen einer ersten Schaltstellung und einer zweiten Schaltstellung hin und her verschiebbar ist.

9. Antriebseinrichtung nach Anspruch 8, **dadurch gekennzeichnet, dass** die Schiebehülse einen druckbeaufschlagbaren Schiebezylinder (88) ausbildet, der an der Getriebewelle (36) axial verschiebbar und drehfest gehalten ist.

10. Antriebseinrichtung nach Anspruch 8 oder 9, **dadurch gekennzeichnet, dass** die Getriebewelle (36) zwei Hydraulikleitungen (102, 103) für Hydraulikflüssigkeit aufweist.

11. Antriebseinrichtung nach Anspruch 8, 9 oder 10, **dadurch gekennzeichnet, dass** die Getriebewelle (36) eine Führungseinrichtung (90) für die Schiebehülse (88) trägt und von zwei ringförmigen Endscheiben (99, 100) umgeben ist, wobei die Führungseinrichtung (90) und die Endscheiben (99, 100) in Kombination mit der Schiebehülse (88) und der Getriebewelle (36) zwei hydraulisch beaufschlagbare Ringräume (96, 97) definieren, in die jeweils eine Hydraulikleitung (102, 103) einmündet.

12. Antriebseinrichtung nach einem der voranstehenden Ansprüche, **dadurch gekennzeichnet, dass** das Schaltgetriebe (26; 86) mindestens eine Bremse (50; 72) umfasst zum drehfesten Arretieren der Exzenterwelle (11).

13. Antriebseinrichtung nach einem der voranstehenden Ansprüche, **dadurch gekennzeichnet, dass** der Antriebsmotor (21) über ein Drehmomentübertragungsglied mit dem Schaltgetriebe (36; 86) verbunden ist.

14. Antriebseinrichtung nach Anspruch 13, **dadurch gekennzeichnet, dass** das Drehmomentübertragungsglied als Riementrieb (24) ausgestaltet ist.

15. Antriebseinrichtung nach einem der voranstehenden Ansprüche, **dadurch gekennzeichnet, dass** das Schaltgetriebe (26; 86) über ein Planetengetriebe (28) mit der Exzenterwelle (11) verbunden ist.
